# EUROPEAN PATENT SPECIFICATION

(11) **EP 1 730 870 B1**
(45) Date of publication and mention of the grant of the patent: **11.08.2010**
(21) Application number: 04793990.5
(22) Date of filing: 01.10.2004
(51) Int. Cl.: H04L 1/18, G06F 11/30

(54) **DATA REPAIR FOR MULTICAST/BROADCAST DATA DISTRIBUTION**
DATENREPARATUR FÜR MULTICAST/RUNDFUNK-DATENVERTEILUNG
CORRECTION DE DONNEES POUR DISTRIBUTION DE DONNEES DE DIFFUSION/MULTIDIFFUSION

(30) Priority: 29.03.2004 US 813343; 30.09.2004 US 614602 P
(43) Date of publication of application: 13.12.2006
(73) Proprietor: Nokia Corporation, 02150 Espoo (FI)
(72) Inventor: LEON, David, 33000 Bordeaux (FR); CURCIO, Igor, Danilo, Diego, FIN-33100 Tampere (FI); WALSH, Rod, FIN-33580 Tampere (FI); MEHTA, Harsh, FIN- Tampere (FI)
(74) Representative: Ruuskanen, Juha-Pekka
(86) International application number: PCT/US2004/032414
(87) International publication number: WO 2005/104421

(56) References cited:
- EP-A- 1 235 383
- US-B1- 6 275 859
- US-B1- 6 577 599
- US-B1- 6 577 599
- NOKIA: "Point-to-point repair for MBMS downloading, Tdoc S4-040092" INTERNET CITATION, [Online] 23 February 2004 (2004-02-23), XP002375820 Retrieved from the Internet: URL:http://www.3gpp.org/ftp/tsg_sa/WG4_COD EC/TSGS4_30/Docs/S4-040092.zip> [retrieved on 2006-04-05]
- SADOK D F H ET AL: "An enhanced reliable multicast protocol for wireless environments" VEHICULAR TECHNOLOGY CONFERENCE, 2000. IEEE VTS FALL VTC 2000. 52ND SEPT. 24-28, 2000, PISCATAWAY, NJ, USA,IEEE, 24 September 2000 (2000-09-24), pages 975-982, XP010525513 ISBN: 0-7803-6507-0

## Description

### FIELD OF THE INVENTION

The invention generally relates to multicast and broadcast transmission technology and services, that is, services with at least one data source (or sender) and at least one receiver. More particularly, the invention relates to data repair enhancements in a multicast or broadcast transmission.

### BACKGROUND OF THE INVENTION

For one-to-many (i.e., point-to-multipoint) services over systems such as IP multicast, IP datacasting (IPDC) and multimedia broadcast/multicast services (MBMS), file delivery (or discrete media delivery or file download) is an important service. Many of the features for delivering files over point-to-point protocols such as file transfer protocol (FTP) and hypertext transfer protocol (HTTP) are problematic for one-to-many scenarios. In particular, the reliable delivery of files - that is the guaranteed delivery of files - using similar one-to-one (i.e., point-to-point) acknowledgement (ACK) protocols such as transmission control protocol TCP is not feasible.

The Reliable Multicast Transport (RMT) Working Group of the Internet Engineering Task Force (IETF) is in the process of standardizing two categories of error-resilient multicast transport protocols. In the first category, reliability is implemented through the use of (proactive) forward error correction (FEC), that is, by sending a certain amount of redundant data that can help a receiver in reconstructing erroneous data. In the second category, receiver feedback is used in order to implement reliable multicast transport. Asynchronous Layered Coding (ALC, *RFC 3450)* is a protocol instantiation belonging to the first category, while the NACK-Oriented Reliable Multicast (NORM) protocol presents an example of the second category, The details of ALC and NORM protocols are discussed in more detail in publications entitled *"Asynchronous Layered Coding (ALC) Protocol Instantiation" (IETF RFC 3450)* and *"NACK-oriented Reliable Multicast Protocol"* (Internet Draft) prepared by the Working Group of the IETF.

Access networks on which these protocols can be used include, but are hot limited to, wireless multiple-access networks such as radio access networks of the Universal Mobile Telecommunications Services (UMTS) system, wireless local area networks (WLAN), Digital Video Broadcasting - Terrestrial (DVB-T) networks Digital Video Broadcasting - Satellite (DVB-S) networks and Digital Video Broadcasting-Handheld (BDVE-H) networks.

Briefly, ALC protocol is a proactive FEC-based scheme that allows receivers to reconstruct mangled packets or packets that have not been received. ALC protocol uses FEC encoding on multiple channels, allowing the sender to send data at multiple rates (channels) to possibly heterogeneous receivers. Additionally, ALC protocol uses a congestion control mechanism to maintain different rates on different channels.

ALC protocol is massively scalable in terms of the number of users because no uplink signalling is required. Therefore, adding more receivers does not put increased demand on the system. However, ALC protocol is not 100% reliable because reception is not guaranteed, thus it may be generally described as robust, rather than reliable.

NORM, in turn, specifies the use of negative acknowledgement (NACK) messages in order to signal which packets of data (or otherwise defined "data blocks") that were expected to arrive at the receiver were not received at the receiver (or were received incorrectly). In other words, receivers employ NACK messages to indicate loss or damage of transmitted packets to the sender. Accordingly, a receiver that "missed" some data blocks from a data transmission can send a NACK message to the sender requesting the sender to re-transmit the missed data block or blocks. NORM protocol also optionally allows for the use of packet-level FBC encoding for proactive robust transmissions.

File Delivery over Unidirectional Transport (FLUTE) is a one-to-many transport protocol that builds on FEC (*RFC 3452*) and ALC building blocks. It is intended for file delivery from sender(s) to receiver(s) over unidirectional systems. It has specializations which make it suitable to wireless point-to-multipoint (multicast/broadcast) systems. The details of FLUTE protocol are discussed in more detail in the publication entitled *"FLUTE* - *File Delivery over Unidirectional Transport"* (Internet Draft) prepared by the above-mentioned Working Group of the IETF.

NACK messages are not generally NORM specific, but they can also be used in connection with other protocols or systems, such as FLUTE. An ACK is a response message a receiver sends after receiving one or more data packets to acknowledge they were received correctly. A NACK is a response a receiver sends to the sender about packets that were expected to arrive, but were not received.

When in multicast or broadcast environment, the data transmission occurs in a one-to-many fashion. If the transmission is not error free and different receivers are subject to different error rates (for example in MBMS users in different cells may experience different signal quality and, as a consequence, different error rate), there is the problem of providing increased data reliability. This can be achieved through the use of FEC and/or through the use of repair sessions.

FEC provides a certain amount of redundancy to the transmitted data, in order to allow a certain degree of error resilience to enable a receiver to reconstruct the transmitted data. However, one problem of FEC is that it usually does not provide error free error recovery, or it provides full error recovery at the cost of a high use of data redundancy, wich increases the channel band width requirements.

A repair session (between receiver and sender) can be employed to complement FEC (to reduce of eliminate the residual channel error rate), or can be used alone as the only method for error recovery. A repair session can occur over a point-to-point channel using a separate session. In this case, all the receivers that have missed some data during the multicast/broadcast transmission, send NACK requests to the sender to request the retransmission of the missing packets. However, if all the receivers miss at least one data packet, all the receivers will establish simultaneously point-to-point connections with the sender causing feedback implosion, i.e., congestion in the network (in uplink direction for the large number of NACKs and in downlink direction for the large number of concurrent re-transmission and network connection requests) and overload of the sender. This situation is critical when considering, for example, thousands of users, as may b e the case in MBMS networks.

As such, there is a need for an improved device, system, and method for data repair that is scalable and provides efficient repair of messages in multicast and broadcast environments.

"Point to point repair for MBMS downloading, Tdo S4-040092" by Nokia discloses a point-to-point repair mechanism for MBMS using FLUTE. This repair mechanism is part of the SA2 architecture specifications.

### SUMMARY OF THE INVENTION

In a first aspect of the present invention there is provided a method of data repair in point-to-multipoint communications systems according to claim 1. In a second aspect of the present invention there is provided a point-to-multipoint communication system according to claim 7. In a third aspect of the present invention there is provided a computer program code product according to claim 12. In a fourth aspect of the present invention there is provided a sender device according to claim 14.

Various embodiments of systems, methods, devices and computer code products are disclosed according to the present invention. The various embodiments are capable of point-to-multipoint communications and can include transmitting data from a sender to a plurality of receivers via a point-to-multipoint session, determining if any expected data was not received, sending a data repair request to the sender if data is missing, and retransmitting the missing data via the point-to-multipoint session. The sender also can be configured for scheduling and performing point-to-point repair sessions if the point-to-multipoint retransmission does not correct the loss of data problem.

A randomization mechanism can be used to delay point-to-point data repair until after the sender retransmits data indicated as not received via the point-to-multipoint session. Tho randomization mechanism can be configured to take into account the number of receivers included in the plurality of receivers. Alternatively (or additionally), the sender can send a point-to-point repair token to the plurality of receivers to announce when point-to-point repair will begin.

In another embodiment of the invention, a method for data repair in a system comprising a sender device, at least one receiver capable of receiving data from the sender device, an HTTP server and a FLUTE server is disclosed. The method can include determining that some expected data was not received by the at least one receiver, sending a data request from the at least one receiver to the HTTP server, sending an HTTP redirect message from the HTTP server to the at least one receiver, the redirect message including a FLUTE URI, sending a session request from the at least one receiver to the FLUTE server, and initiating a FLUTE session between the FLUTE server and the at least one receiver.

### BRIEF DESCRIPTION OF THE DRAWINGS

FIG. 1A is a block diagram illustrating a point to multipoint transmission scenario in accordance with one embodiment of the invention;

FIG. 1B is a block diagram illustrating different missing data repair methods in accordance with embodiments of the invention;

FIG. 2A is a flow chart diagram illustrating one embodiment of a method for data repair according to the present invention;

FIG. 2B is a flow chart diagram illustrating another embodiment of a method for data repair according to the present invention;

FIG. 3 is a block diagram of a system and receiver device in accordance with one embodiment of the invention;

FIG. 4 is a block diagram illustrating a sender device in accordance with one embodiment of the invention.

FIG. 5 is a representation of one embodiment of a repair mechanism according to the present invention.

### DETAILED DESCRIPTION OF THE PREFERRED EMBODIMENTS

There are various methods and systems for repairing data in a multicast or broadcast system. U.S. patent, application entitled "Data Repair" (serial no. 10/782,371) filed on February 18, 2004, describes efficient methods for repairing data. This application proposes that after reception of a certain number of NACK requests from receivers, the sender may decide, based on its own decision strategies, to retransmit via point-to-multipoint part of the total number of packets that are NACKed by the receivers, for example, those packets that are most requested from the receivers. The sender may also close the point-to-point connections in order to save network resources.

One drawback with methods such as these is that retransmitting only the most NACKed packets may not lead to total error recovery in the case where there is little statistical correlation between the NACK requests of different users. For example, if a particular error situation is such that receiver #1 NACKs for packets 1, 2, and 3, and receiver #2 NACKs for packets 4, 5, and 6, and so on, the sender may not be able to derive what are the "most requested packets" and, as a consequence, the point-to-multipoint repair may lose its efficiency. The subject invention proposes improved methods, devices and systems for data repair.

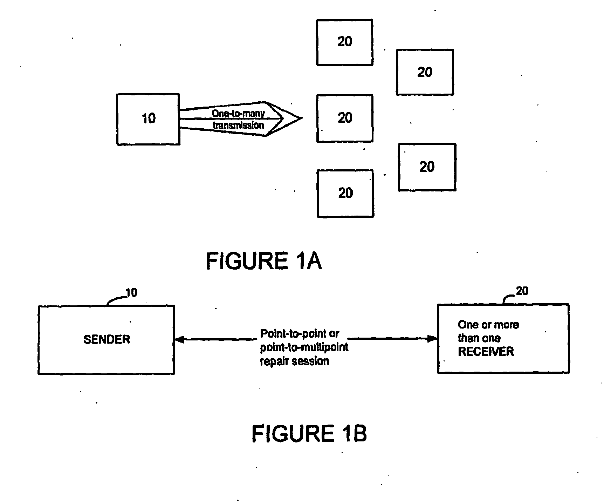

Figure 1A shows a point-to-multipoint data transmission scenario in accordance with an embodiment of the invention. The sender device 10 can be a server, IP-based device, DVB device, GPRS (or UMTS) device or similar device that may use proactive forward error correction, such as an ALC mechanism and/or FEC mechanism, for sending multicast data blocks (or packets) to receiver devices 20 in a one-to-many fashion. Each receiving device 20 can be configured to send negative acknowledgement NACK messages (or requests) to the sender device 10 concerning missing blocks (blocks not received or received incorrectly).

Data can be transferred from sender 10 to receiver(s) 20 as objects. For instance, a file, a JPEG image, and a file slice are all objects. The objects can be sent as a series of data blocks. Each data block can have a number called a source block number (SBN) or similar identifier, which can be used to identify each block. Blocks can be represented by a set of encoding symbols. An encoding symbol identifier (ESI) or similar identifier, in turn, can indicate how the encoding symbols carried in the payload of a data packet (or block) were generated from the above-mentioned object (e.g., file).

In a point-to-multipoint system, a sender 10 can broadcast data blocks or packets representing an object to many receivers 20 simultaneously. If a receiver 20 does not receive all of the packets that it expects, it can send a NACK message back to the server 10 indicating which packets were not received. Figure 1B illustrates several different data repair methods in accordance with embodiments of the subject invention. In general, repair of missing data can be performed by using a point-to-point repair session established between one sender 10 and one receiver 20 or by using a point-to-multipoint session between the sender 10 and more than one receiver 20. In a repair session, missing data in total or in part (depending on the case) can be re-transmitted from the sender 10 to the receiver(s) 20 or the whole transmission can be repeated. Repair may be effected from the original sender 10 or from a "third party server" or repair server (or just simply a separate server (not shown)) which has a connection with the original server and is configured to buffer the transmission data/information. This server may, for example, be co-located with the original sender (e.g., an MBMS server, also called BM-SC (Broadcast Multicast- Service Center)), or, for example, be a separte server within an UMTS operator's network.

It has been observed that, in general, reliable multicast systems present the problem of requiring receiver-server control and data messaging which, due to the multiparty nature of multicast, presents scalability problems. There are several areas, in particular, which are of concern. For example:
a) limited radio bandwidth and activation resources, where the time it would take to activate many radio channels and the radio bandwidth makes it infeasible to allow many repairs to occur simultaneously;
b) limited server capacity, where the server system, which is providing the "repair content" data, can handle limited numbers of requests (messaging) and associated session context data within a certain time window and a limited amount of simultaneous data transfer sessions: and
c) limited end-to-end bandwidth, due to one or more bottlenecks in the overall system. Here the data rate, which could be made available to all the users requiring repair simultaneously, is, in many cases, insufficient to provide this service.

Thus, one factor which may be used to increase scalability under any or all of these limitations can be to distribute the messaging in time, or avoid it entirely if possible. One embodiment of the subject invention concerns methods, devices, and systems which can enable NACK suppression to provide scalable reliable multicast.

One embodiment of the subject invention proposes that all packets that are requested by at least one receiver 20 be retransmitted by the server 10 on the point-to-multipoint bearer. In this embodiment, the receivers 20 can be configured to have both a point-to-point (ptp) bearer and point-to-multipoint (ptm) bearer setup at the same time. The ptp bearer can be used, for example, to service repair requests as described in U.S. Patent Application No. 10/782,371. One embodiment of the subject invention can use randomization rules similar to those described in the aforementioned patent application. However, the embodiment of the subject invention can retransmit the lost data on the downlink ptm bearer instead of using the downlink ptp bearer.

In this embodiment, receivers 20 whose turn to request has not come yet because of the random back-off value they computed, may have the opportunity to repair their own loss by receiving lost packets retransmitted through the ptm channel. If a receiver 20 receives a missing data packet through the ptm channel, it can reconstruct the file using this data and remove the missing data packet from its list of packets to request. It may be possible that a receiver 20 can receive all of its missing data before its computed request time, in which case it could refrain from making any repair requests at all.

In another embodiment of the subject invention, ptp repair can be offered by a sender 10 in conjunction with the above-described ptm repair mechanism. This may be useful, in particular, for sessions when not all of the receivers 20 are capable of having both a ptp and ptm bearer open at the same time. In this case, for greater efficiency, the sender 10 may specify a randomization mechanism so as to delay requests for ptp repair. This allows repair on the ptm bearer that may benefit a higher number of receiver 20 to be done first. One way to do so, for example, may be through the use of threshold values (such as X, Y, Z) sent by the sender 10 to the receivers 20. The receiver 20 could then be configured to schedule their repair requests. One sample rule for receivers 20 to schedule repair requests according to one embodiment of the present invention could be:
If ptm repair is possible, then
   uniformly randomize the NACK(s) over a time period X, starting from the end of the initial delivery session;
   else
   wait until after a certain time Y after the initial session ends, and then randomize the NACK(s) over a time period Z.

The sender 10 could also explicitly signal when ptp repair should start. To this end, the sender can send a ptp repair token to the receivers 20 to announce when ptp repair can start (when ptp repair starts, the ptp repair session can be subject to the normal randomization rules.) Prior to sending the ptp repair token, all repairs are done on the ptm bearer. Receivers 20 that are not capable of having two concurrent bearers (e.g. ptp and ptm) can thus wait for the token before they setup their ptp repair bearer. The repair token can be transmitted using any communication protocol at any of the layers 1-7 of the ISO OSI protocol stack, including, for example, via SDP in a separate "announcement" after the multicast/broadcast transmission. This can also be included in a FLUTE file delivery within a multicast/broadcast transmission. A separate Transport Object Identifier (TOI) value can be used to distinguish between the file content itself and the ptp repair content. In one embodiment of the subject invention, a receiver 20 that has already used ptm repair may also use ptp repair. This can be useful if the ptm repair was not successful, i.e. the packet that was resent on the ptm bearer was lost.

While randomization can help prevent feedback implosion, it is preferable that back-off times be computed according to the number of receivers 20 in a system in order to increase efficiency. If the back-off times are chosen to small, the risk of feedback implosion may not be minimized, especially if there are a large number of receivers 20 in the session. If, on the other hand, the back-off times are too large, the risk of feedback implosion decreases but the scheme becomes inefficient if there are only a few receivers in the session since each receiver will be required to wait an unnecessarily large amount of time before being able to make a repair request.

If the sender 10 knows the number of receivers 20 in a session, the sender 10 may be able to scale its randomization values based on the number of receivers 20 to optimize the performance of the system. One such type of session is an MBMS multicast session, where the sender 10 is able to derive the number of receivers 20 as the latter need to signal the session join and leave procedures. In one embodiment, a linear relation between the number of receivers 20 in the session and the randomization values can be used to compute the necessary threshold values. For example, using the randomization method proposed in U.S. Patent Application No. 10/782,371;
If below the threshold error rate W then
   uniformly randomize the NACK(s) over a time period X, starting from the end of the initial delivery session;
   else
   wait until after a certain time Y after the initial session ends, and then randomize the NACK(s) over a time period Z

The values of W, X, Y, and Z can be fixed and chosen according to the number of participants (number of receivers) in the session. A look-up table, such as the sample one show below, can be stored on the sender device 10 and a look-up into the proper table entry can be used to choose the threshold values.

| # of receivers | W(%) | X (sec) | Y (sec) | Z (sec) |
|---|---|---|---|---|
| 100 | 5 | 5 | 25 | 10 |
| 200 | 5 | 10 | 30 | 20 |
| 500 | 5 | 15 | 35 | 30 |
| 1000 | 5 | 20 | 40 | 40 |
| 5000 | 5 | 30 | 50 | 60 |
| 10000 | 5 | 60 | 80 | 120 |
| 50000 | 5 | 200 | 250 | 400 |
| 100000 | 5 | 400 | 450 | 800 |
| 500000 | 5 | 2000 | 2100 | 4000 |
| 1000000 | 5 | 4000 | 4200 | 8000 |

It should be noted that the above table is merely one sample.

The four values (or in general the values for randomizing the starting time of the repair session) can be communication from the sender to the receivers via SDP or any other suitable means. The values can be communicated to the receivers anytime between service announcement and the session start time or the latest join time. For example, if a session is announced now via SDP, and scheduled to start after two hours (or alternatively the latest session joining time after 1.5 hours from the delivery of the service announcement), a second SDP with the randomization parameters can be sent, using a second announcement or token which takes into account the number of receivers 20 that joined the session any time before the start of the session. In this case, the receivers 20 get an indication of the randomization time, which takes into account the real and updated number of receivers that have joined the session. Alternatively, the parameters can be communicated within the FDT of a FLUTE session or only a subset of these values may vary with the number of receivers.

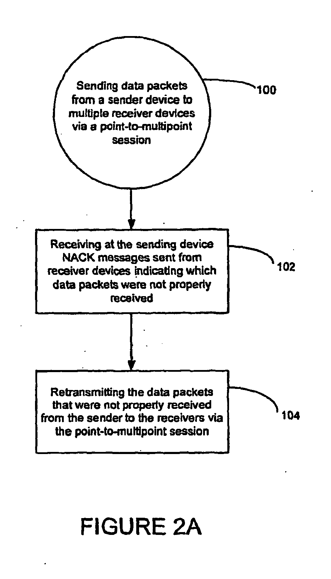

Turning now to Figure 2A, one embodiment of a method for providing data repair is disclosed. The method disclosed in Figure 2A comprises sending data packets from the sender to a plurality of receivers via a point-to-multipoint session (100). If the any of the receivers determines that it has not received some expected data it sends a NACK massage back to the sender requesting data packets were not properly received and the sender receives these NACK massages (102). Next the sender retransmits the requested data packets to the receivers via the point-to-multipoint session (104).

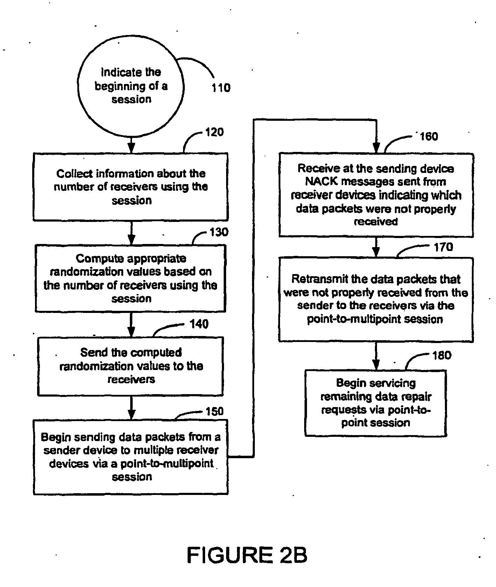

Another embodiment of the invention is shown in Figure 2B. In this embodiment, the sender indicates the beginning of a point-to-multipoint session (110) and then collects information about the number of receivers using the session (120). The sender then computes randomization values based on the number of receivers using the session (130) and sends the randomization values to the receivers (140). Next, the sender begins sending data packets to the receivers via the point-to-multipoint session (150). If any of the receivers does not receive all of the expected data packets, it sends a NACK message back to the sender requesting retransmission of the missed data packets. The sender receives these NACK messages (160) and retransmits the requested data packets on the point-to-multipoint session. Then, the server begins servicing any remaining data repair requests via point-to-point session (180). The point-to-point sessions are randomized over a period of time based on the randomization values computed by the sender based on the number of receivers using the point-to-multipoint session.

The data repair methods described herein provide distinct advantages when compared to prior art methods. For example, sending a repair block that a receiver 20 requests via ptp repair via ptm instead of via downlink ptp unloads the ptp channel and helps other receivers 20 that may need the same repair block. Also, scaling the randomization values according to the number of receivers helps avoid the risk of feedback implosion while still minimizing the delay necessary to send requests.

When using a mechanism, such as FLUTE, for transmitting data to many users in an efficient manner, a method for identifying, NACKing and retransmitting missing data is necessary. In one embodiment of the invention, it is possible to use HTTP to do so. For example, the receiving terminal may use HTTP to request the transmitting server to retransmit a certain file or part of a file. In some cases, a server may be required to retransmit the files to several terminals or may not have the file and hence may need to redirect the request to another server. One aspect of this invention provides an efficient system and method for ptm repair for FLUTE and other such sessions.

While HTTP requests may be used to obtain a missing set of data from a transmission, it is desirable to have a repair mechanism that can enable a large number of receivers to receive a certain transmission again. In one embodiment, this can be achieved by using the HTTP redirect mechanism with a download URI for FLUTE. The download URI for FLUTE can be analogous to an HTTP URL. That is, it is similar to the HTTP URL, but applicable for FLUTE. The FLUTE URI can refer to a signel file transmitted during a certain FLUTE session. Using the FLUTE URI, a file from a certain FLUTE session can thus be uniquely identified.

In this embodiment, an HTTP server can indicate to the receiver the source from which the file required by the receiver is available. By using the HTTP redirect mechanism, an HTTP server can redirect one or more terminals that have not received a transmission correctly to a FLUTE server that can then start a new ptm repair session for multiple receivers.

In another aspect of the this embodiment, the HTTP redirect mechanism can also be used to indicate to the receiver the location of a FLUTE session description file (such as an SDP file). By using a session description file, the receiver can join a FLUTE session and obtain it file(s) of interest. The client can then cross-reference with already received and stored session descriptions to check if it has already received this particular session description file. It can then attempt to fetch the missing file/packets/resource using HTTP/FLUTE, etc. In this example, the FLUTE URI can be the URI of an SDP file that described the FLUTE session to which the file in question belongs (i.e. the FLUTE session in which it was transmitted and during which the terminal received this file).

In other embodiment, the HTTP redirect may also contain the session description file as payload. This can be done using an absolute URI in the payload and/or by using a redirect code. When a session description file is used to do a redirect, it may be desirable to version the session description file. This can be achieved by using an extension header or by using the metadata envelope. The metadata envelope encapsulates or references the session description file and provides a versioning mechanism. In this example, the URL of the file can be included in the header of the HTTP redirect message, such as in the form www.example.com/file/mp3.

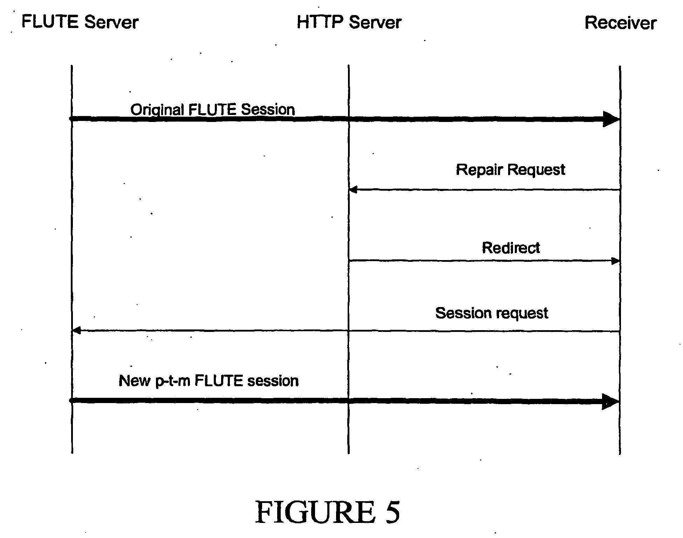

Figure 5 illustrates one embodiment of a method for using the FLUTE URI and HTTP redirect mechanism to launch a ptm file repair session. As shown in Figure 5, on transmission of a FLUTE session, the receiver may realize that is has not received a complete file. In such a case, the receiver may send a repair request to an HTTP server. The address of the HTTP server may be known to the receiver from repair information transmitted during the FLUTE session. On obtaining the repair request, the HTTP server can decide that it is more efficient to conduct a ptm session using FLUTE rather than several individual ptp repair sessions using HTTP. This may be done for several reasons, such as the number of repair requests received are too high for the HTTP server does not itself possess the requested file. In this case, the HTTP server can send a redirect to the receiver with the FLUTE URI of the file. On obtaining the redirect from the HTTP server, the receiver can send a "session request" to the FLUTE server. The FLUTE server can then start a ptm FLUTE session with potentially many receivers "tuned in." It is possible for the FLUTE and HTTP servers to be separate entities but still be-located on the same physical machine.

One example of an SDP file that can be used for session descriptions is:
*v=0*
*o = user 123 2890844526 2890842807 IN IP6 2201:056D::112E:144A: 1E24*
*s=File delivery session example*
*i = More information*
*t=2873397496 2873404696*
*a =source-filter: incl IN IP6* * *2001:210:1:2:240:96FF:FE25:8EC9*
*a = flute-tsi:3*
*a = flute-ch: 2*
*m = applica tion 12345 FLUTE*/*UDP 0*
*c = IN IP6 FF1E:03AD::7F2E:172A:1E24*/*1*
*m=application 12346 FLUTE*/*UDP 0*
*c = IN IP6 FF1E:03AD:: 7F2E:172A:1E30*/*1*

This example file describes how a receiver can join a FLUTE session, It provides information regarding the sender IP address, the number of channels in the session, the destination IP address and port number for each channel in the session, the Transport Session identifier (TSI) of the session, and the start and end times of the session.

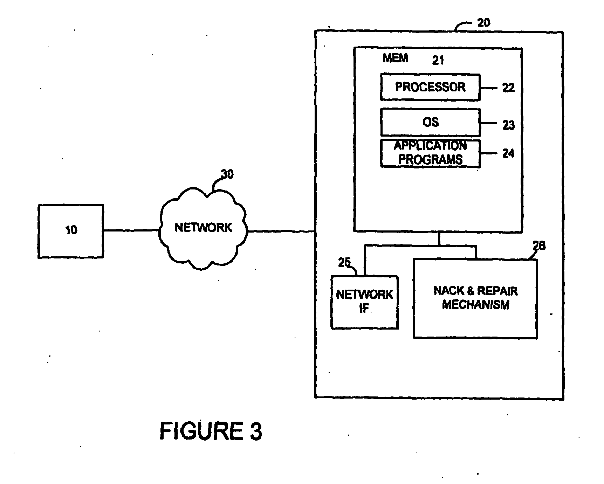

Figure 3 illustrates one embodiment of a system 5 and receiver device 20 in accordance with the present invention. The system 5 can include a sender device 10, a transmission network 30, e.g., an IP network or another fixed network, a wireless network or a combination of a fixed and wireless (cellular) network, etc., and the receiver device 20. The receiver device 20 can be, for example, a cellular telephone, a satellite telephone, a personal digital assistant, a Bluetooth device, a WLAN device, a DVB device, or other similar wireless device. The receiver 20 can include an internal memory 21, a processor 22, an operating system 23, application programs 24, a network interface 25, and a NACK and repair mechanism 26. The internal memory 21 may be configured to accommodate the processor 22, operating system 23 and application programs 24. The NACK and repair mechanism 26 can enable the NACKing and repair procedures in response to missing or mangled data in a data transmission. The receiver device 20 can be capable of communication with the sender device 10 and with other devices via the network interface 25 and the network 30.

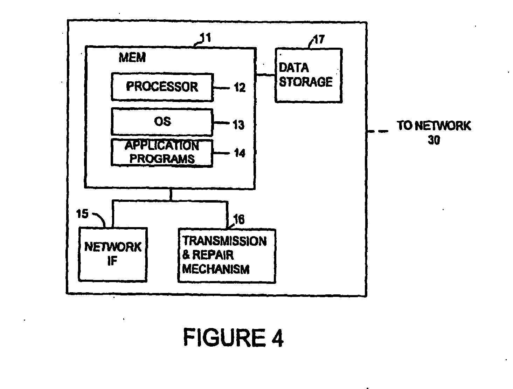

Figure 4 illustrates one embodiment of a sender device 10 in accordance with the present invention. The sender device 10 can be, for example, a network server or any suitable device intended for file (or media) delivery. The sender device 10 can include internal memory 11, a processor 12, an operating system 13, application programs 14, a network interface 15, a transmission and repair mechanism 16, and a data storage 17. The internal memory 11 can be configured to accommodate the processor 12, operating system 13, and application programs 14. The transmission and repair mechanism 16 can be configured to enable the transmission of data packets to receiver devices 20. Furthermore, it can be setup to enable re-transmission of data packets in repair sessions. Data to be sent to receiver devices 20 and data to be re-transmitted can be stored in the data storage 17. Alternatively, data can be stored in a separate device co-located with or outside of the sender device 10. The sender device 10 can be configured to communicate with the receiver device 20 and other devices via the network interface 15 and the network 30.

Procedures relating to repair of missing data can be implemented by software. A computer program product comprising program code stored in the receiver device 20 and run in the processor 22 can be used to implement the procedures at the receiving end of the transmission session, whereas a computer program product comprising program code stored in the sender device 10 and run in the processor 12 can be used to implement the procedures at the transmitting end.

Embodiments of the invention have been illustrated with examples or logical sender/server entitles and receiver units, however, the use of other entities going between for repair requests, and repair responses (if appropriate), are also contemplated and considered within the scope of the subject invention. Such an entity may provide firewall, proxy, and/or authorization services.

While the exemplary embodiments illustrated in the FIGURES and described above are presently preferred, it should be understood that these embodiments are offered by way of example only. Other embodiments may include, for example, different techniques for performing the same operations. The invention is not limited to a particular embodiment, but extends to various modifications, combinations, and permutations that nevertheless fall within the scope the appended claims.

## Claims

1. A method for data repair in a point-to-multipoint communications system, the method comprising:
transmitting data from a sender (10) to a plurality of receivers (20) via a point-to-multipoint session;
determining if any expected data was not received;
if some expected data was not received, sending a data repair request to the sender (10) requesting that the expected-but-not-received data be resent; and
retransmitting from the sender (10) all of the requested expected-but-not-received data via the point-to-multipoint session **characterised in that**:
after the sender (10) retransmits expected-but-not-received data, if some data was still not received, scheduling point-to-point repair sessions for specific receivers (20) which expected data that was not received
wherein scheduling point-to-point repair sessions further comprises specifying a randomisation mechanism to randomise point-to-point data repair over a certain time period after the sender (10) has retransmitted the requested expected-but-not-received data; and
sending data still not received to the specific receivers (20) via point-to-point sessions according to the point-to-point repair session schedule.

2. The method of claim 1, wherein scheduling point-to-point repair sessions further comprises:
if point-to-multipoint repair is possible for a receiver (20), then
uniformly randomising data repair requests over a time period X starting from the end of the initial transmitting of data from the sender to the receivers (20) via the point-to-multipoint session;
else
waiting a certain time Y after the initial transmitting of data from the sender (10) to the receivers (20) via the point-to-multipoint session and then randomising the data repair requests over a time period Z.

3. The method of claim 1, wherein scheduling point-to-point repair sessions comprises sending a point-to-point repair token from the sender (10) to the plurality of receivers (20) to announce when point-to-point repair will begin.

4. The method of claim 1, wherein the randomisation mechanism is configured to take into account the number of receivers (20) included in the plurality of receivers (20).

5. The method of claim 4, further comprising:
determining the number of receivers (20) in the plurality of receivers (20); an
computing the randomisation values for the randomisation mechanism based on the determined number of receivers (20).

6. The method of claim 5, wherein computing the randomisation values further comprises looking up the randomisation values up in a look-up table based on the determined number of receivers (20).

7. A point-to-multipoint communication system for repairing data, the system comprising:
a sender device (10) for transmitting data via point-to-multipoint communications;
a plurality of receivers (20) for receiving data from the sender device(10);
wherein the sender device(10) is configured to transmit data to the plurality of receivers via a point-to-multipoint session;
the plurality of receivers (20) are configured to receive data transmitted by the sender device(10), determine if any expected data was not received, and, if so, send a data repair request back to the sender device (10) requesting that the expected-but-not-received data to be resent; and
the sender device (10) is configured to receive data repair requests from the plurality of receivers (20) and to retransmit all of the requested expected-but-not-received data via the point-to-multipoint session;
**characterised in that**:
the sender device(10) is further configured to schedule point-to-point data repair sessions with the plurality of receivers (20) after retransmission of the requested expected-but-not-received data if some data was still not received;
wherein the sender device (10) is further configured to specify a randomisation mechanism to randomise point-to-point data repair over a certain time period after the sender has retransmitted the requested expected-but-not-received data; and
the sender is configured to send expected-but-not-received data to the plurality of receivers (20)according to the point-to-point sessions schedule.

8. The system of claim 7 wherein the sender can determine the number of receivers on the point-to-multipoint session and can compute a randomisation mechanism that is based on the determined number of receivers (20).

9. The system of claim 7 wherein the sender is configured to send a point-to-point repair token to the plurality of receives to announce when point-to-point repair will begin.

10. The system of claim 7 further comprising a look-up table for determining the point-to-point repair schedule.

11. A computer code product embodied on a computer readable medium, the computer code product comprising:
computer code configured to:
transmit data from a sender (10) to a plurality of receivers via a point-to-multipoint session;
determine if expected data was not received at any of the plurality of receivers (20);
make a data repair request if any expected data was not received at any of the plurality of receivers (20); and
retransmit all of the requested expected-but-not-received data to the plurality of receivers via the point-to-multipoint session **characterised in that**
after the expected-but-not-received data has been retransmitted, if some data is still not received the computer program is configured to schedule point-to-point repair sessions for specific receivers which expected data that was not received;
wherein the computer program is further configured to specify a randomisation mechanism to randomise point-to-point data repair over a certain time period after the sender has retransmitted the requested expected-but-not-received data; and
to send data still not received to the specific receivers via point-to-point sessions according to the point-to-point repair session schedule.

12. The compute code product of claim 11 wherein the computer code is further configured to determine the number of receivers (20) on the point-to-multipoint session and schedule the point-to-point data repair sessions based on the determined number of receivers (20).

13. A sender device (10) for use in a point-to-multipoint communication system, the sender device comprising:
means for transmitting data to a plurality of receivers (20) via a point-to-multipoint session;
means for receiving data repair requests from the plurality of receivers (20) requesting expected-but-not-received data;
means for retransmitting all of the requested expected-but-not-received data via a point-to-multipoint session **characterised in that** the device further comprises means for scheduling point-to-point data repair sessions with the plurality of receivers after retransmitting the requested expected-but-not received data if some data was still not received;
wherein the means for scheduling point-to-point repair sessions is further configured to specify a randomisation mechanism to randomise point-to-point data repair over a certain time period after the sender has retransmitted the requested expected-but-not-received data; and the device further comprises:
means for sending data still not received to the specific receivers (20) via point-to-point sessions according to the point-to-point repair session schedule.

14. The sender device of claim 13 wherein the sender device further comprises means for determining the number of receivers using the point-to-multipoint session wherein the sender is configured to schedule the point-to-point data repair sessions based on the determined number of receivers (20).

## Patentansprüche

1. Verfahren zur Datenausbesserung in einem Punkt-zu-Mehrpunkt-Kommunikationssystem, wobei das Verfahren umfasst:
Übertragen von Daten von einem Sender (10) zu mehreren Empfängern (20) über eine Punkt-zu-Mehrpunkt-Sitzung;
Bestimmen, ob irgendwelche erwarteten Daten nicht empfangen worden sind;
wenn einige erwartete Daten nicht empfangen worden sind, Senden einer Datenausbesserungsanfrage an den Sender (10), die anfordert, dass die erwarteten, aber nicht empfangenen Daten erneut gesendet werden; und
erneut Übertragen aller angeforderten erwarteten, aber nicht empfangenen Daten von dem Sender (10) über die Punkt-zu-Mehrpunkt-Sitzung, **dadurch gekennzeichnet, dass**:
nachdem der Sender (10) erwartete, aber nicht empfangene Daten erneut überträgt, wenn einige Daten immer noch nicht empfangen wurden, Planen von Punkt-zu-Punkt-Ausbesserungssitzungen für bestimmte Empfänger (20), die Daten erwartet haben, die nicht empfangen worden sind;
wobei Planen von Punkt-zu-Punkt-Ausbesserungssitzungen des Weiteren Bestimmen eines Zufallsanordnungsmechanismus umfasst, um eine Punkt-zu-Punkt-Datenausbesserung über eine bestimmte Zeitspanne zufällig anzuordnen, nachdem der Sender (10) die angeforderten erwarteten, aber nicht empfangenen Daten erneut übertragen hat; und
Senden von Daten, die immer noch nicht empfangen worden sind, an den bestimmten Empfänger (20) über Punkt-zu-Punkt-Sitzungen gemäß dem Punkt-zu-Punkt-Ausbesserungssitzungszeitplan.

2. Verfahren nach Anspruch 1, bei welchem Planen von Punkt-zu-Punkt-Ausbesserungssitzungen des Weiteren umfasst:
wenn Punkt-zu-Mehrpunkt-Ausbesserung für einen Empfänger (20) möglich ist, dann
einheitliches, zufälliges Anordnen von Datenausbesserungsanfragen über eine Zeitspanne X, die am Ende des Erstübertragens von Daten von dem Sender an den Empfänger (20) über die Punkt-zu-Mehrpunkt-Sitzung beginnt;
oder
Warten für eine bestimmte Zeit Y nach dem Erstübertragen von Daten von dem Sender (10) an den Empfänger (20) über die Punkt-zu-Mehrpunkt-Sitzung und dann zufälliges Anordnen der Datenausbesserungsanfragen über eine Zeitspanne Z.

3. Verfahren nach Anspruch 1, bei welchem Planen von Punkt-zu-Punkt-Ausbesserungssitzungen Senden eines Punkt-zu-Punkt-Ausbesserungstokens von dem Sender (10) an die mehreren Empfänger (20) umfasst, um anzukündigen, wann eine Punkt-zu-Punkt-Ausbesserung beginnen wird.

4. Verfahren nach Anspruch 1, bei welchem der Zufallsanordnungsmechanismus so ausgelegt ist, dass er die Anzahl der Empfänger (20) berücksichtigt, die in den mehreren Empfängern (20) umfasst sind.

5. Verfahren nach Anspruch 4, des Weiteren umfassend:
Bestimmen der Anzahl von Empfängern (20) der mehreren Empfänger (20); und Berechnen der Zufallsanordnungswerte für den Zufallsanordnungsmechanismus basierend auf der bestimmten Anzahl von Empfängern (20).

6. Verfahren nach Anspruch 5, bei welchem Berechnen der Zufallsanordnungswerte des Weiteren Nachsehen der Zufallsanordnungswerte in einer Verweistabelle basierend auf der bestimmten Anzahl von Empfängern (20) umfasst.

7. Punkt-zu-Mehrpunkt-Kommunikationssystem zum Ausbessern von Daten, wobei das System umfasst:
ein Sendegerät (10) zum Übertragen von Daten über Punkt-zu-Mehrpunkt-Kommunikation;
mehrere Empfänger (20) zum Empfangen von Daten von dem Sendegerät (10);
wobei das Sendegerät (10) ausgelegt ist, Daten an die mehreren Empfänger über eine Punkt-zu-Mehrpunkt-Sitzung zu übertragen;
wobei die mehreren Empfänger (20) ausgelegt sind, Daten zu empfangen, die durch das Sendegerät (10) übertragen werden, zu bestimmen, ob irgendwelche erwarteten Daten nicht empfangen worden sind, und gegebenenfalls eine Datenausbesserungsanfrage zurück an das Sendegerät (10) zu senden, die anfordert, dass die erwarteten, aber nicht empfangenen Daten erneut versendet werden; und
wobei das Sendegerät (10) ausgelegt ist, Datenausbesserungsanfragen von den mehreren Empfängern (20) zu empfangen und erneut alle der angeforderten erwarteten, aber nicht empfangenen Daten über die Punkt-zu-Mehrpunkt-Sitzung zu übertragen;
**dadurch gekennzeichnet, dass**:
das Sendegerät (10) des Weiteren ausgelegt ist, Punkt-zu-Punkt-Datenausbesserungssitzungen mit den mehreren Empfängern (20) nach einer erneuten Übertragung der angeforderten erwarteten, aber nicht empfangenen Daten zu planen, wenn einige Daten immer noch nicht empfangen worden sind;
wobei das Sendegerät (10) des Weiteren ausgelegt ist, einen Zufallsanordnungsmechanismus zu bestimmen, um eine Punkt-zu-Punkt-Datenausbesserung über eine bestimmte Zeitspanne zufällig anzuordnen, nachdem der Sender die angeforderten erwarteten, aber nicht empfangenen Daten erneut übertragen hat; und
der Sender ausgelegt ist, erwartete, aber nicht empfangene Daten an die mehreren Empfänger (20) gemäß dem Punkt-zu-Punkt-Sitzungenzeitplan zu senden.

8. System nach Anspruch 7, bei welchem der Sender die Anzahl von Empfängern an der Punkt-zu-Mehrpunkt-Sitzung bestimmen kann und einen Zufallsanordnungsmechanismus berechnen kann, der auf der bestimmten Anzahl von Empfängern (20) basiert.

9. System nach Anspruch 7, bei welchem der Sender ausgelegt ist, einen Punkt-zu-Punkt-Ausbesserungstoken an die mehreren Empfänger zu senden, um anzukündigen, wann eine Punkt-zu-Punkt-Ausbesserung beginnen wird.

10. System nach Anspruch 7, des Weiteren eine Verweistabelle zum Bestimmen des Punkt-zu-Punkt-Ausbesserungszeitplans umfassend.

11. Computercodeprodukt, das auf einem computerlesbaren Medium ausgebildet ist, wobei das Computercodeprodukt umfasst:
Computercode, der ausgelegt ist, um:
Daten von einem Sender (10) an mehrere Empfänger über eine Punkt-zu-Mehrpunkt-Sitzung zu übertragen;
zu bestimmen, ob erwartete Daten an irgendeinem der mehreren Empfänger (20) nicht empfangen worden sind;
eine Datenausbesserungsanfrage zu erzeugen, wenn irgendwelche erwarteten Daten bei irgendeinem der mehreren Empfänger (20) nicht empfangen worden sind; und
alle angeforderten erwarteten, aber nicht empfangenen Daten an die mehreren Empfänger über die Punkt-zu-Mehrpunkt-Sitzung erneut zu versenden, **dadurch gekennzeichnet, dass**
nachdem die erwarteten, aber nicht empfangenen Daten erneut übertragen wurden, wenn einige Daten immer noch nicht empfangen worden sind, das Computerprogramm ausgelegt ist, Punkt-zu-Punkt-Ausbesserungssitzungen für bestimmte Empfänger zu planen, die Daten erwarten, die nicht empfangen worden sind;
wobei das Computerprogramm des Weiteren ausgelegt ist, einen Zufallsanordnungsmechanismus zu bestimmen, um Punkt-zu-Punkt-Datenausbesserung über eine bestimmte Zeitspanne zufällig anzuordnen, nachdem der Sender die angeforderten erwarteten, aber nicht empfangenen Daten erneut übertragen hat; und
um Daten, die immer noch nicht empfangen worden sind, an den bestimmten Empfänger über Punkt-zu-Punkt-Sitzungen gemäß dem Punkt-zu-Punkt-Ausbesserungssitzungszeitplan zu senden.

12. Computercodeprodukt nach Anspruch 11, bei welchem der Computercode des Weiteren ausgelegt ist, die Anzahl von Empfängern (20) in der Punkt-zu-Mehrpunkt-Sitzung zu bestimmen und die Punkt-zu-Punkt-Datenausbesserungssitzungen basierend auf der bestimmten Anzahl von Empfängern (20) zu planen.

13. Sendegerät (10) zur Verwendung in einem Punkt-zu-Mehrpunkt-Kommunikationssystem, wobei das Sendegerät umfasst:
ein Mittel zum Übertragen von Daten an mehrere Empfänger (20) über eine Punkt-zu-Mehrpunkt-Sitzung;
ein Mittel zum Empfangen von Datenausbesserungsanfragen von den mehreren Empfängern (20), die erwartete, aber nicht empfangene Daten anfordern;
ein Mittel zum erneuten Übertragen von allen angeforderten erwarteten, aber nicht empfangenen Daten über eine Punkt-zu-Mehrpunkt-Sitzung, **dadurch gekennzeichnet, dass** das Gerät des Weiteren ein Mittel zum Planen von Punkt-zu-Punkt-Datenausbesserungssitzungen mit den mehreren Empfängern umfasst, nachdem die angeforderten erwarteten, aber nicht empfangenen Daten erneut übertragen wurden, wenn irgendwelche Daten immer noch nicht empfangen worden sind;
wobei das Mittel zum Planen von Punkt-zu-Punkt-Ausbesserungssitzungen des Weiteren ausgelegt ist, einen Zufallsanordnungsmechanismus zu bestimmen, um Punkt-zu-Punkt-Datenausbesserungen über eine bestimmte Zeitspanne zufällig anzuordnen, nachdem der Sender die angeforderten erwarteten, aber nicht empfangenen Daten erneut übertragen hat; und das Gerät des Weiteren umfasst:
ein Mittel zum Senden von Daten, die immer noch nicht empfangen worden sind, an die bestimmten Empfänger (20) über Punkt-zu-Punkt-Sitzungen gemäß dem Punkt-zu-Punkt-Ausbesserungssitzungszeitplan.

14. Sendegerät nach Anspruch 13, bei welchem das Sendegerät des Weiteren ein Mittel zum Bestimmen der Anzahl von Empfängern umfasst, die die Punkt-zu-Mehrpunkt-Sitzung nutzen, wobei der Sender ausgelegt ist, die Punkt-zu-Punkt-Datenausbesserungssitzungen basierend auf der bestimmten Anzahl von Empfängern (20) zu planen.

## Revendications

1. Procédé de réparation de données dans un système de communication de point à multipoint, le procédé comprenant :
la transmission de données d'un émetteur (10) à une pluralité de récepteurs (20) par le biais d'une session de point à multipoint ;
la détermination si des données attendues n'ont pas été reçues ;
si des données attendues n'ont pas été reçues, l'envoi d'une demande de réparation de données à l'émetteur (10) demandant que les données attendues mais pas reçues soient renvoyées ; et
la retransmission depuis l'émetteur (10) de toutes les données attendues mais pas reçues demandées par le biais de la session de point à multipoint, **caractérisé en ce que** :
après la retransmission depuis l'émetteur (10) des données attendues mais pas reçues, si des données n'ont toujours pas été reçues, la planification de sessions de réparation de données de point à point pour des récepteurs spécifiques (20) qui attendaient des données qui n'ont pas été reçues,
dans lequel la planification de sessions de réparation de données de point à point comprend la spécification d'un mécanisme de randomisation pour randomiser la réparation de données de point à point sur une certaine période de temps après que l'émetteur (10) a retransmis les données attendues mais pas reçues demandées ; et
l'envoi des données toujours pas reçues aux récepteurs spécifiques (20) par le biais de sessions de point à point conformément au planning de sessions de réparation de données de point à point.

2. Procédé selon la revendication 1, dans lequel la planification de sessions de réparation de données de point à point comprend en outre :
si la réparation de données de point à multipoint est possible pour un récepteur (20), alors
randomiser uniformément les demandes de réparation de données sur une période de temps X en commençant à partir de la fin de la transmission initiale de données de l'émetteur aux récepteurs (20) par le biais de la session de point à multipoint ;
sinon
attendre un certain temps Y après la transmission initiale de données de l'émetteur (10) aux récepteurs (20) par le biais de la session de point à multipoint puis randomiser les demandes de réparation de données sur une période de temps Z.

3. Procédé selon la revendication 1, dans lequel la planification de sessions de réparation de données de point à point comprend l'envoi d'un jeton de réparation de données de point à point de l'émetteur (10) à la pluralité de récepteurs (20) pour annoncer quand la réparation de données de point à point va commencer.

4. Procédé selon la revendication 1, dans lequel le mécanisme de randomisation est configuré pour tenir compte du nombre de récepteurs (20) inclus dans la pluralité de récepteurs (20).

5. Procédé selon la revendication 4, comprenant en outre :
la détermination du nombre de récepteurs (20) dans la pluralité de récepteurs (20) ; et
le calcul des valeurs de randomisation pour le mécanisme de randomisation sur la base du nombre déterminé de récepteurs (20).

6. Procédé selon la revendication 5, dans lequel le calcul des valeurs de randomisation comprend en outre la recherche des valeurs de randomisation dans une table de consultation sur la base du nombre déterminé de récepteurs (20).

7. Système de communication de point à multipoint pour réparer des données, le système comprenant :
un dispositif émetteur (10) pour transmettre des données par le biais de communications de point à multipoint ;
une pluralité de récepteurs (20) pour recevoir des données du dispositif émetteur (10) ;
dans lequel le dispositif émetteur (10) est configuré pour transmettre des données à la pluralité de récepteurs par le biais d'une session de point à multipoint ;
la pluralité de récepteurs (20) sont configurés pour recevoir des données transmises par le dispositif émetteur (10), déterminer si des données attendues n'ont pas été reçues, et si tel est le cas, renvoyer une demande de réparation de données au dispositif émetteur (10) demandant que les données attendues mais pas reçues soient renvoyées ; et
le dispositif émetteur (10) est configuré pour recevoir des demandes de réparation de données de la pluralité de récepteurs (20) et retransmettre toutes les données attendues mais pas reçues demandées par le biais de la session de point à multipoint ;
**caractérisé en ce que** :
le dispositif émetteur (10) est en outre configuré pour planifier des sessions de réparation de données de point à multipoint avec la pluralité de récepteurs (20) après la retransmission des données attendues mais pas reçues demandées si certaines données ne sont toujours pas reçues ;
dans lequel le dispositif émetteur (10) est en outre configuré pour spécifier un mécanisme de randomisation pour randomiser la réparation de données de point à point sur une certaine période de temps après que l'émetteur a retransmis les données attendues mais pas reçues demandées ; et
l'émetteur est configuré pour envoyer les données attendues mais pas reçues à la pluralité de récepteurs (20) conformément au planning de sessions de réparation de données de point à point.

8. Système selon la revendication 7, dans lequel l'émetteur peut déterminer le nombre de récepteurs sur la session de réparation de données de point à point et calculer un mécanisme de randomisation sur la base du nombre déterminé de récepteurs (20).

9. Système selon la revendication 7, dans lequel l'émetteur est configuré pour envoyer un jeton de réparation de données de point à point à la pluralité de récepteurs pour annoncer quand la réparation de données de point à point va commencer.

10. Système selon la revendication 7, comprenant en outre une table de consultation pour déterminer le planning de réparation de données de point à point.

11. Produit de code informatique incorporé à un support lisible par ordinateur, le code informatique du produit de code informatique comprenant :
un code informatique configuré pour :
transmettre des données d'un émetteur (10) à une pluralité de récepteurs par le biais d'une session de point à multipoint ;
déterminer si des données attendues n'ont pas été reçues à n'importe lequel de la pluralité de récepteurs (20) ;
formuler une demande de réparation de données si des données attendues n'ont pas été reçues à n'importe lequel de la pluralité de récepteurs (20) ; et
retransmettre toutes les données attendues mais pas reçues demandées à la pluralité de récepteurs par le biais de la session de point à multipoint ;
**caractérisé en ce que**
après la retransmission des données attendues mais pas reçues, si des données ne sont toujours pas reçues, le programme informatique est configuré pour planifier des sessions de réparation de données de point à point pour des récepteurs spécifiques qui attendaient des données qui n'ont pas été reçues ;
dans lequel le programme informatique est en outre configuré pour spécifier un mécanisme de randomisation pour randomiser la réparation de données de point à point sur une certaine période de temps après la retransmission par l'émetteur des données attendues mais pas reçues demandées ; et
envoyer les données toujours pas reçues aux récepteurs spécifiques par le biais de sessions de point à point conformément au planning de sessions de réparation de données de point à point.

12. Produit de code informatique selon la revendication 11, dans lequel le code informatique est en outre configuré pour déterminer le nombre de récepteurs (20) sur la session de point à multipoint et planifier les sessions de réparation de données de point à point sur la base du nombre déterminé de récepteurs (20).

13. Dispositif émetteur (10) destiné à être utilisé dans un système de communication de point à multipoint, le dispositif émetteur comprenant :
un moyen de transmission de données à une pluralité de récepteurs (20) par le biais d'une session de point à multipoint ;
un moyen de réception de demandes de réparation de données de la pluralité de récepteurs (20) demandant des données attendues mais pas reçues ;
un moyen de retransmission de toutes les données attendues mais pas reçues demandées par le biais d'une session de point à multipoint, **caractérisé en ce que** le dispositif comprend en outre un moyen de planification de sessions de réparation de données de point à point avec la pluralité de récepteurs après la retransmission des données attendues mais pas reçues demandées si des données n'ont toujours pas été reçues ;
dans lequel le moyen de planification de sessions de réparation de données de point à point est en outre configuré pour spécifier un mécanisme de randomisation pour randomiser la réparation de données de point à point sur une certaine période de temps après que l'émetteur a retransmis les données attendues mais pas reçues demandées ; et le dispositif comprend en outre :
un moyen d'envoi des données toujours pas reçues aux récepteurs spécifiques (20) par le biais de sessions de point à point conformément au planning de sessions de réparation de données de point à point.

14. Dispositif émetteur selon la revendication 13, dans lequel le dispositif émetteur comprend en outre un moyen de détermination du nombre de récepteurs en utilisant la session de point à multipoint dans lequel l'émetteur est configuré pour planifier les sessions de réparation de données de point à point sur la base du nombre déterminé de récepteurs (20).
